(19) Europäisches Patentamt / European Patent Office / Office européen des brevets

(11) **EP 2 597 360 A1**

(12) **DEMANDE DE BREVET EUROPEEN**

(43) Date de publication:
**29.05.2013  Bulletin 2013/22**

(51) Int Cl.:
*F21S 8/12* *(2006.01)*    *F21V 5/04* *(2006.01)*

(21) Numéro de dépôt: **12193271.9**

(22) Date de dépôt: **19.11.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **22.11.2011  FR 1160658**

(71) Demandeur: **VALEO VISION**
**93012 Bobigny Cedex (FR)**

(72) Inventeurs:
• **Albou, Pierre**
**75013 Paris (FR)**
• **Sanchez, Vanesa**
**75011 Paris (FR)**
• **Courcier, Marine**
**75004 Paris (FR)**

(54) **Dispositif d'émission de lumière pour projecteur de véhicule automobile**

(57)    L'invention a pour objet un dispositif d'émission d'un faisceau lumineux de sortie, notamment pour véhicule automobile, ledit faisceau étant délimité par une première coupure (1) suivant un premier plan de coupure et par une deuxième coupure (2) suivant un deuxième plan de coupure différant du première plan de coupure, le dispositif comportant un ensemble de génération de lumière comprenant une source lumineuse (3), un réflecteur (6) agencé pour générer un faisceau lumineux réfléchi à partir des rayons lumineux issus de la source lumineuse (3) et une paroi de cache (4) pourvue d'une bordure (5) située sur le chemin du faisceau lumineux réfléchi et configurée pour former la première coupure (1) caractérisé en ce que le réflecteur (6) est agencé pour générer la deuxième coupure (2).

Fig.1

EP 2 597 360 A1

**(Cont. page suivante)**

Fig. 2

Fig. 13

**Description**

La présente invention est relative notamment à un dispositif d'émission de lumière. L'invention est aussi relative à un module de projection de lumière intégrant le dispositif ainsi qu'à un système d'éclairage doté de deux dispositifs. Une application préférée concerne l'industrie automobile pour la réalisation de dispositifs de signalisation et/ ou d'éclairage, notamment de projecteurs de véhicule.

Dans ce dernier domaine, on connait des modules d'éclairage ou projecteurs, parmi lesquels on trouve traditionnellement essentiellement :

- des feux de croisement, ou codes, de portée sur la route avoisinant les 70 mètres, qui sont utilisés essentiellement la nuit et dont la répartition du faisceau lumineux est telle qu'elle permet de ne pas éblouir le conducteur d'un véhicule croisé. Typiquement, ce faisceau présente une coupure en partie supérieure avec une portion horizontale, préférentiellement environ 0,57 degrés en dessous de l'horizon, afin de ne pas éclairer la zone dans laquelle devrait se trouver le conducteur d'un véhicule arrivant en sens inverse,

- des feux de route longue portée, dont la zone de portée sur la route peut atteindre 600 mètres, et qui doivent être éteints lorsque l'on croise ou suit un autre véhicule afin de ne pas éblouir son conducteur,

- des feux antibrouillard.

Plus récemment, on a développé des modes d'éclairage partiel consistant à former un faisceau sélectif présentant des zones sombres aux endroits où se trouvent des véhicules ou personnes à ne pas éblouir. L'éclairage de la route est amélioré relativement aux seuls feux code, tout en évitant la gêne d'une luminosité excessive pour les conducteurs croisés ou suivis, gêne qu'occasionneraient par exemple des feux de route longue portée traditionnels. Une telle fonction d'éclairage sélectif est encore dénommée ADB (acronyme de l'anglais *Adaptative Driving Beam* que l'on peut traduire par faisceau feux de route adaptatif).

La publication FR-A1-2942020 propose dans ce domaine un module de projection associant une source lumineuse de type LED (pour diode électroluminescente) pour une fonction « code » et une source lumineuse de technologie similaire pour une fonction complémentaire route. Cette antériorité traite spécifiquement du problème de la séparation sombre ou éclairée entre faisceau code et la distribution complémentaire route. La fonction code est quant à elle réalisée avec une coupure verticale et une coupure horizontale qui permettent une répartition spatiale sélective du faisceau code émis. Ces deux coupures sont mises en oeuvre avec une surface de cache combinée avec une lame profilée. La lumière émise par la source LED considérée est réfléchie par un collecteur miroir avant de subir la double coupure créée par le cache et la lame. Bien que pouvant apparaître comme la solution la plus simple, cette technique de coupure engendre beaucoup de pertes de lumière.

L'invention permet de résoudre cet inconvénient.

A cet effet, l'invention concerne un dispositif d'émission d'un faisceau lumineux de sortie, notamment pour véhicule automobile. Ce dispositif est tel que ledit faisceau est délimité par une première coupure suivant un premier plan de coupure et par une deuxième coupure suivant un deuxième plan de coupure différant du premier plan de coupure. Le dispositif comporte un ensemble de génération de lumière comprenant une source lumineuse, un réflecteur agencé pour générer un faisceau lumineux réfléchi à partir des rayons lumineux issus de la source, une paroi de cache pourvue d'une bordure située sur le chemin du faisceau lumineux réfléchi et configurée pour former la première coupure. Il est **caractérisé en ce que** le réflecteur est agencé pour générer la deuxième coupure.

Alors que l'art antérieur traite le faisceau pour y créer des coupures en aval de la source lumineuse et d'un miroir, l'invention réalise l'une des coupures au moyen même d'un réflecteur. La coupure ainsi produite n'implique plus de cache ou de lame ce qui conduit à une meilleure efficacité lumineuse conjuguée à une rationalisation de l'ensemble formé doté de moins d'éléments fonctionnels séparés.

Suivant un cas avantageux, le réflecteur présente une génératrice au profil sensiblement en forme de portion d'une ellipse en section suivant un plan parallèle au deuxième plan de coupure. La génératrice peut représenter au moins un quadrant de l'ellipse.

Le centre de la source lumineuse peut, par ailleurs, être situé, en projection avantageusement orthogonale, sur le plan de la génératrice, à l'un des foyers de la génératrice et/ou sur le grand axe de l'ellipse dont est issue la génératrice du réflecteur. Ainsi, les rayons émis par la source sont globalement dirigés vers le deuxième foyer de construction de la génératrice au profil elliptique. La génératrice est préférentiellement située sensiblement au milieu de la hauteur du réflecteur suivant le premier plan de coupure ou perpendiculairement au deuxième plan de coupure. Le deuxième plan de coupure est avantageusement horizontal et optionnellement le plan de la génératrice rencontre la source.

La source en question peut être rectangulaire. Suivant une possibilité, un bord de la source, de préférence le bord horizontal supérieur, est contenu dans le plan de la génératrice. La source est ainsi par exemple un émetteur rectangulaire vertical dont le bord supérieur affleure le plan de la génératrice.

Le réflecteur est de préférence réalisé de façon à ce que l'image de la source formée en chaque point du réflecteur sur un plan à l'infini perpendiculaire à l'axe optique du réflecteur touche une droite située à l'intersection entre le plan perpendiculaire et le plan de la génératrice sans que la droite ne traverse ladite image.

On notera que les paramètres de construction de la surface du réflecteur permettent éventuellement de modifier la netteté de la deuxième coupure. Par exemple, si la deuxième coupure est horizontale ou proche de l'horizontale, une coupure inférieure floue peut améliorer la fusion avec un autre faisceau.

Le dispositif d'éclairage selon l'invention peut également présenter, outre les caractéristiques principales énoncées dans le paragraphe précédent, une ou plusieurs des caractéristiques complémentaires suivantes:

- la bordure de la paroi de cache est située sensiblement au niveau d'un deuxième foyer de la génératrice. Les rayons réfléchis par le réflecteur se concentrent ainsi à ce niveau.
- la paroi de cache est plane et contient avantageusement l'axe du réflecteur.
- la paroi de cache est réfléchissante. On réalise ainsi une plieuse assurant la réflexion des rayons qui l'impactent. De cette façon, l'invention produit avantageusement des rayons quittant le réflecteur tels qu'une partie, avantageusement une moitié, parvient directement sur un élément de projection et qu'une autre partie, avantageusement l'autre moitié des rayons quittant le réflecteur, est d'abord réfléchie par la paroi de cache.
- l'élément de projection du faisceau lumineux de sortie est configuré pour produire un étalement de la lumière suivant le deuxième plan de coupure sans modifier sensiblement la répartition de la lumière suivant le premier plan de coupure. Cet élément participe donc à la formation de la première coupure et n'altère pas la deuxième coupure. Suivant un premier mode de réalisation, l'élément de projection du faisceau lumineux de sortie comprend ou est constitué d'une lentille. La lentille comporte préférentiellement une ligne de foyers objet située au niveau de la bordure de la paroi de cache. Il peut s'agir d'une lentille cylindrique d'axe orienté suivant la première coupure ou perpendiculaire au deuxième plan de coupure. La paroi de cache fournit un bord imagé par la lentille pour former ladite première coupure.
- la lentille comporte de préférence deux portions de sections différentes suivant le deuxième plan de coupure, une première des deux portions recevant majoritairement de la lumière issue directement du réflecteur, la seconde des deux portions recevant majoritairement de la lumière issue d'une réflexion sur la paroi de cache, les profils des deux portions se rejoignant au niveau de l'axe optique de la lentille avec une direction de tangente commune. La séparation de la lentille en deux zones fonctionnelles permet de l'adapter au mieux selon les besoins. En particulier elles permettent de traiter les éventuelles aberrations chromatiques. Avantageusement, la lentille n'est pas parfaitement stigmatique en lui donnant une légère courbure dans le plan de contact des deux portions de lentilles, pour corriger les aberrations géométriques.
- l'élément de projection du faisceau lumineux de sortie peut comprendre, à la place d'une lentille, un réflecteur secondaire dont la surface est une portion de cylindre de génératrices orientées parallèlement au premier plan de coupure et de section droite en forme de portion de parabole. Le profil en forme de portion de parabole comporte, à titre préféré, un foyer situé sensiblement au niveau de la bordure de la paroi de cache.
- l'élément de projection et l'ensemble de génération de lumière peuvent présenter une mobilité relative. Le dispositif peut alors faire office de projecteur avec un faisceau tournant pour une fonction ADB (Adaptative Driving Beam) en déplaçant une partie du dispositif seulement. La mobilité relative peut être réalisée avec un élément de projection mobile et un ensemble de génération de lumière fixe, ou l'inverse. La mobilité peut inclure une rotation et/ou une translation.
- le premier plan de coupure est vertical et le deuxième plan de coupure est horizontal. On forme ainsi un faisceau dont la section est en voile de navire, les lignes de coupure formant un « L » ou une image en miroir d'un « L ».
- la majorité des rayons émis par la source parviennent jusqu'à l'élément de projection. S'il y a d'éventuelles pertes, elles ne se produisent pas, au coefficient de réflexion près, au niveau du cache lorsqu'il est réfléchissant.
- la source lumineuse est une diode électroluminescente ou un groupe de telles diodes. Avantageusement, la source a globalement une forme rectangulaire.

D'une manière générale, dans la présente invention, comme la deuxième coupure est réalisée au moyen même d'un réflecteur et n'implique pas de cache ou de lame, alors que la première coupure est générée avec un cache, on a une première coupure plus nette que la deuxième coupure. En effet, comme la première coupure est générée par projection du cache, notamment de sa bordure, son image est plus nette. Ainsi lorsqu'on utilise la deuxième coupure pour être une bordure inférieure d'un faisceau partiel, elle peut être jointe ou superposée à la coupure supérieure d'un faisceau présentant cette coupure supérieure, notamment une coupure avec une portion horizontale, avec plus d'homogénéité au niveau de la jonction de ces deux faisceaux que si la deuxième coupure était obtenue par un cache. En revanche, comme on utilise alors la première coupure pour faire une coupure transversale, la netteté de la coupure permet de bien positionner celle-ci à côté d'un véhicule arrivant en sens inverse, pour ne pas éblouir le conducteur.

Selon une variante de l'invention, la lentille comprend une série de motifs sur une surface optique d'entrée ou de sortie de la lentille, lesdits motifs s'étendant selon une direction privilégiée parallèle à la bordure du cache. Cela permet d'obtenir un étalement des rayons de part et d'autre de la coupure dans un plan privilégié perpendiculaire à ladite direction privilégiée et donc à la bordure. Dans ce cas, grâce à cette variante de lentille, la première coupure préférentiellement destinée à être une coupure verticale, sera moins nette qu'en l'absence de ces motifs.

Un avantage est que cette variante permet de joindre deux faisceaux partiels obtenus au moyen de deux dispositifs selon cette variante de l'invention, l'un générant un faisceau avec une coupure verticale à droite et l'autre générant un faisceau avec une coupure verticale à gauche, tout en conservant une bonne homogénéité lorsque l'on joint les coupures.

Cela permet également de créer moins de contraste entre la zone d'ombre et la zone éclairé au niveau des coupures verticales. Le faisceau est alors plus confortable pour le conducteur du véhicule depuis lequel ce faisceau est émis.

Selon une réalisation de cette variante, la lentille peut en outre avoir les caractéristiques suivantes :

- les motifs s'étendent sur toute la surface d'entrée ou de sortie de la lentille,
- les motifs sont obtenus par une modulation d'épaisseur à la surface de la lentille,
- les motifs sont des stries s'étendant selon la direction privilégiée,
- les stries sont configurées et agencées de sorte que la face qui les porte est ondulée,
- la lentille présente une surface géométrique de base correspondant notamment à une face de sortie d'une lentille présentant une section stigmatique, et caractérisée par le fait que la face ondulée de la lentille comporte des ondulations de pente variable, cette pente étant mesurée par rapport à la surface géométrique de base, cette pente étant de préférence d'autant plus grande que l'ondulation est proche d'un axe passant par le centre de la lentille, pour produire une seule zone d'éclairement maximal dans le faisceau complémentaire.
- l'amplitude des ondulations est décroissante au fur et à mesure que l'ondulation considérée est éloignée du centre de la lentille.

Selon un autre exemple de réalisation avec une lentille comportant ces motifs, les motifs ne s'étendent pas sur toute la surface d'entrée ou de sortie de la lentille, et le dispositif d'éclairage selon l'invention est agencé de manière à ce que seulement une portion de la lentille reçoive les rayons réfléchis qui, après sortie de la lentille, formeront la coupure du faisceau. Dans cette exemple de réalisation, la lentille présente des motifs tel que décrits précédemment uniquement sur cette zone.

L'invention est aussi relative à un module de projection de lumière comportant un dispositif selon l'invention et des moyens de rotation dudit dispositif.

Elle porte également sur un système d'éclairage comprenant un premier dispositif et un deuxième dispositif de l'invention, le premier dispositif étant agencé pour que son faisceau lumineux de sortie soit à droite d'une coupure latérale correspondant à sa première coupure, le deuxième dispositif étant agencé pour que son faisceau lumineux de sortie soit à gauche d'une coupure latérale correspondant à sa première coupure.

Un autre objet de l'invention est un véhicule équipé d'au moins un dispositif de l'invention et/ou d'au moins un module et/ou d'au moins un système tels qu'indiqués ci-dessus.

D'autres caractéristiques, buts et avantages de la présente invention apparaitront à la lecture de la description détaillée qui suit, et en regard des dessins annexés donnés à titre d'exemples non limitatifs et sur lesquels :

- la figure 1 schématise la section d'un faisceau à double coupure qui peut être obtenu par l'invention avec une zone d'intensité lumineuse maximale en Imax ;
- la figure 2 présente en perspective des composants de l'invention, représentés schématiquement ;
- la figure 3 est une coupe suivant la verticale représentant le profil du réflecteur et la déviation particulière des rayons qu'il renvoie ;
- la figure 4 est une coupe perpendiculaire à celle de la figure 3, au niveau de la source lumineuse, illustrant le profil du réflecteur suivant cette orientation ainsi que le chemin de rayons lumineux ;
- la figure 5 est un exemple de fonction d'étalement du faisceau pouvant servir de base à la conception de la forme du réflecteur, en définissant des objectifs d'étalement du faisceau dans la direction de la deuxième coupure ;
- la figure 6 et la figure 7 révèlent un mode particulier de réalisation d'une lentille servant d'élément de projection du faisceau de sortie avec une adaptation de la lentille suivant qu'elle reçoit des rayons issus directement ou via la paroi du cache ;
- la figure 8 est une variante de l'invention avec un décalage de l'axe optique de la lentille relativement à l'ensemble formé par la source, le réflecteur et la paroi du cadre ;
- la figure 9 montre un cas alternatif au mode de réalisation à lentille. Ce cas emploie un réflecteur secondaire comme élément de projection ;
- les figures 10 et 11 présentent deux variantes du cas de la figure 9 avec, respectivement, un décalage en translation et en rotation, entre le réflecteur secondaire et l'ensemble formé par la source, le réflecteur et la paroi du cadre ;

- la figure 12 illustre en coupe suivant le deuxième plan de coupure, des paramètres utiles à la définition de la surface du réflecteur.
- la figure 13 présente en perspective des composants d'une variante de l'invention, représentés schématiquement ;
- la figure 14 est une coupe de la figure 13, au niveau de la source lumineuse 3, selon un plan parallèle au plan XY ;
- les figures 15 et 16 sont des représentations d'un faisceau route sélectif obtenu par un système selon l'invention, lorsque respectivement un véhicule est croisé et lorsqu'aucun véhicule n'est croisé ou suivi ;
- la figure 17 représente l'amplitude de l'ondulation sur la lentille des figures 13 et 14 en fonction de la position transversale sur la lentille, soit selon l'axe Y ;
- la figure 18 est un zoom sur la partie centrale de la courbe de la figure 17.

Les termes « vertical » et « horizontal » sont utilisés dans la présente description pour désigner des directions, notamment des directions de coupure de faisceau, suivant une orientation perpendiculaire au plan de l'horizon pour le terme « vertical », et suivant une orientation parallèle au plan de l'horizon pour le terme « horizontal ». Elles sont à considérer dans les conditions de fonctionnement du dispositif dans un véhicule. L'emploi de ces mots ne signifie pas que de légères variations autour des directions verticale et horizontale soient exclues de l'invention. Par exemple, une inclinaison relativement à ces directions de l'ordre de + ou - 10° est ici considérée comme une variation mineure autour des deux directions privilégiées.

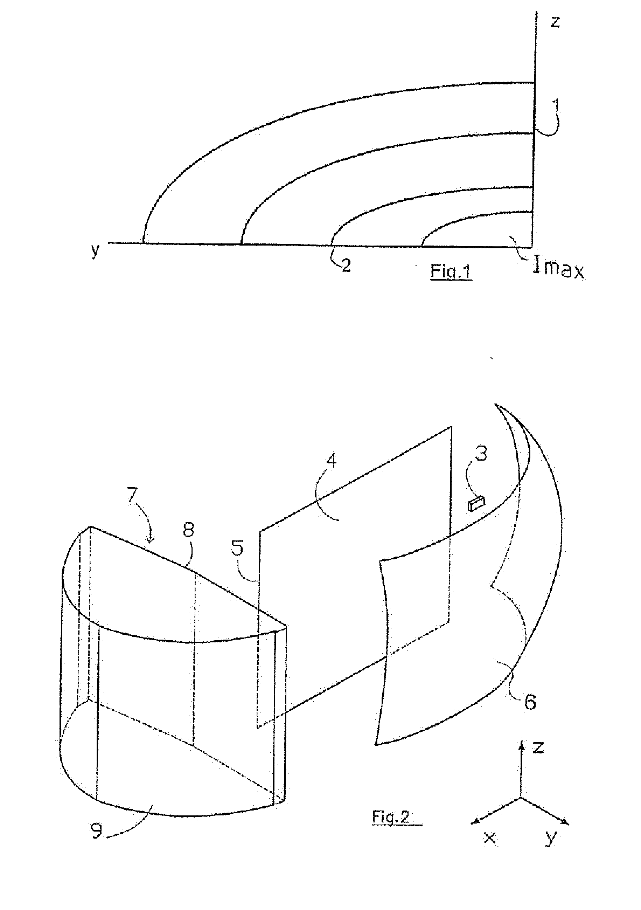

La figure 1 montre schématiquement un exemple de faisceau de sortie avec une première coupure 1, sensiblement verticale, et une deuxième coupure 2, sensiblement horizontale. L'intersection des coupures verticale et horizontale (ici inférieure) forme un « L ». Le point I max représente la zone d'intensité lumineuse maximale du faisceau de sortie qui a la forme d'une voile de navire.

Les coupures produites par le dispositif de l'invention peuvent par ailleurs avoir toute orientation dans l'espace. La verticale comme direction de plan de première coupure et l'horizontale pour le plan de deuxième coupure ne sont donc que des exemples.

Par ailleurs, l'invention peut associer des dispositifs additionnels pour la projection d'autres faisceaux alternativement ou en complément du faisceau produit grâce au dispositif d'émission de lumière décrit plus en détail ci-après.

A titre d'exemple préféré, ce faisceau peut être additionné à un faisceau de type code pour un fonctionnement selon le mode d'éclairage dit ADB. Par exemple, l'ensemble peut être monté sur une platine tournante dont l'orientation suivant une direction verticale permet d'ajuster la fonction adaptative d'éclairage. Selon une variante préférentielle, le dispositif générant le faisceau ADB est mobile par rapport au dispositif générant le faisceau code. Dans une application ADB, les paramètres d'éclairage suivants peuvent être retenus :

- flux au moins égal à 300 lm (lumens) ;
- éclairement maximal du faisceau de sortie de l'ordre de 15 degrés horizontalement (avec un niveau d'éclairement de l'ordre de 6 lux à 25 m) et au moins de 5 degrés de hauteur au-dessus de l'horizontal.

Le dispositif de l'invention comporte une source lumineuse 3 avantageusement configurée pour émettre des rayons lumineux sensiblement vers le côté avec une direction moyenne orientée suivant un axe y dans le repère orthogonal illustré par exemple en figure 2. La source lumineuse 3 peut être constituée d'une ou plusieurs sources individuelles et plus particulièrement d'une ou plusieurs diodes électroluminescentes (LED). Dans le cas d'une pluralité de diodes (LED), il est avantageux de les positionner dans un même plan. Dans les exemples illustrés, ce plan est de manière non limitative orienté suivant la verticale. A noter que selon certaines variantes de réalisation, ce plan pourrait être incliné.

Dans le cas de l'exemple représenté, la source lumineuse 3 est constituée d'une seule LED, par exemple avec plusieurs éléments semi-conducteurs, positionnée au niveau d'un premier foyer $F_1$ du réflecteur 6, transversalement au réflecteur et dans un plan vertical avec une orientation de sorte à ce que son émission soit dirigée vers le côté en regard du réflecteur. L'axe du réflecteur est plus particulièrement défini par la ligne des foyers géométriques $F_1$ et $F_2$ situés sur le grand axe de l'ellipse dont une partie sert de génératrice pour construire le réflecteur, comme cela ressortira en détail plus loin.

En se référant maintenant à la figure 2, est illustré de manière schématique un élément de projection du faisceau de sortie ici sous forme de lentille 7. L'ensemble de génération de lumière comporte dans cet exemple :

- la source lumineuse 3 précédemment décrite ;
- un réflecteur 6 ;
- une paroi de cache 4 avec une bordure 5 au niveau de laquelle une partie du flux lumineux réfléchie par le réflecteur 6 est interceptée.

Avantageusement, la paroi de cache 4, qui participe à la première coupure 1, est orientée suivant un plan vertical (ou autre selon l'inclinaison du plan de la première coupure). Sa bordure 5 définit la ligne de première coupure 1. Selon un mode avantageux, ce bord peut être rectiligne. Pour éviter les pertes, la paroi de cache 4 fait avantageusement office de plieuse et présente à cet effet une surface réfléchissante dans sa zone où de la lumière est réfléchie par le réflecteur 6

On place avantageusement la source lumineuse 3, la paroi de cache 4 et le réflecteur 6 de sorte à ce qu'une partie de la lumière émise arrive directement à l'élément de projection via le réflecteur 6 (la lentille 7 pour le cas de la figure 2) et qu'une partie de la lumière y arrive indirectement, après réflexion seconde sur la paroi de cache 4.

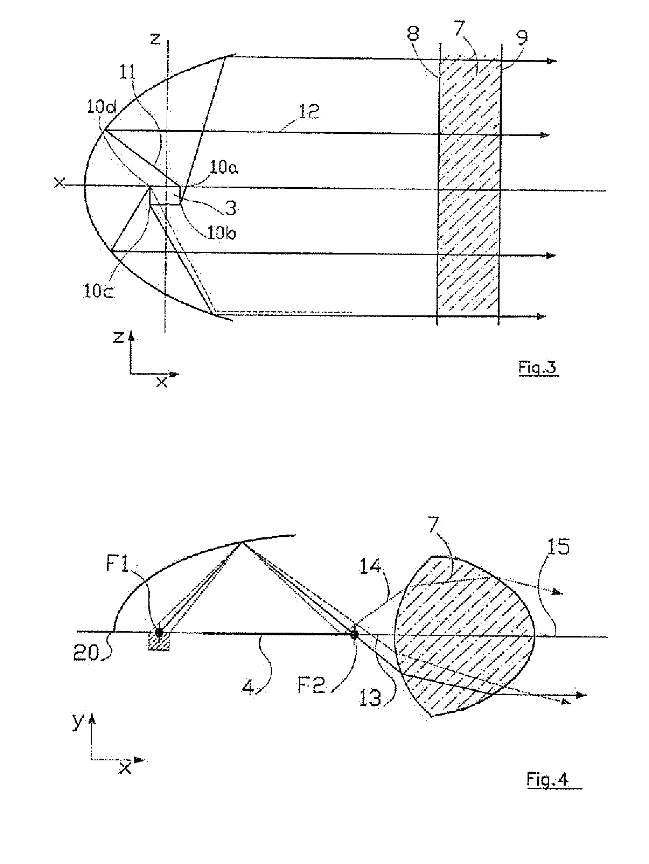

Pour y parvenir, la source lumineuse 3 est préférentiellement placée dans le plan de la paroi de cache 4 de sorte à être située en regard du réflecteur 6 et à émettre avec un rayon moyen perpendiculaire à la paroi de cache 4 et à l'axe optique 15 de la lentille visible en figure 4.

Les rayons sortant de l'ensemble formé par la source lumineuse 3, le réflecteur 6 et la paroi de cache 4 entrent dans la lentille 7 par sa face arrière 8 et sortent en face avant 9.

Comme indiqué précédemment, la bordure 5 de la paroi de cache 4 permet de définir la première coupure 1. La lentille 7 coopère avec la paroi de cache 4 pour générer l'étalement souhaité du faisceau de sortie suivant l'horizontale (ou plus généralement, suivant le deuxième plan de coupure). La lentille 7 image à l'infini la bordure 5 qui est avantageusement placée dans le plan foyer objet de la lentille 7.

Suivant l'autre plan de coupure, la lentille 7 est avantageusement dépourvue de puissance optique. En effet, selon l'invention, la deuxième coupure 2 est produite par le réflecteur 6 dont la forme assure que les rayons qu'il réfléchit ne vont pas en-deçà du deuxième plan de coupure. Pour ne pas altérer la coupure ainsi générée par le réflecteur 6, la lentille 7 est configurée pour ne pas modifier la direction verticale des rayons qui atteignent la lentille et qui sont parallèles au deuxième plan de coupure.

La figure 3 illustre en particulier, dans une coupe suivant le premier plan de coupure, comment les rayons sont réfléchis et transmis par la lentille 7 pour que le faisceau sortant ait une deuxième coupure, c'est-à-dire dans l'illustration, qu'aucun rayon réfléchi 12 issu d'un rayon émis 11 par la source lumineuse 3 ne se dirige vers le bas.

En revenant à la figure 2, on a présenté un repère orthogonal x, y, z dont l'emploi permettra ci-après de simplifier la définition des directions utiles à la compréhension de l'invention. Le plan (x, z) correspond au plan dans lequel se situe la première coupure 1. Avantageusement, z est la direction verticale. Le plan (x, y) est alors un plan horizontal. La direction y correspond préférentiellement à la direction d'émission moyenne de la source 3. Une référence au même repère x, y, z est faite aux figures 4, 6, 7 et 8.

La figure 4 montre en coupe suivant un plan (x, y) sensiblement orienté parallèlement au plan de la deuxième coupure 2 dans le mode de réalisation de l'invention utilisant une lentille 7 comme élément de projection. Cette figure permet plus particulièrement de visualiser un profil préféré du réflecteur 6 et un positionnement relatif avantageux des composants de l'ensemble de génération de lumière.

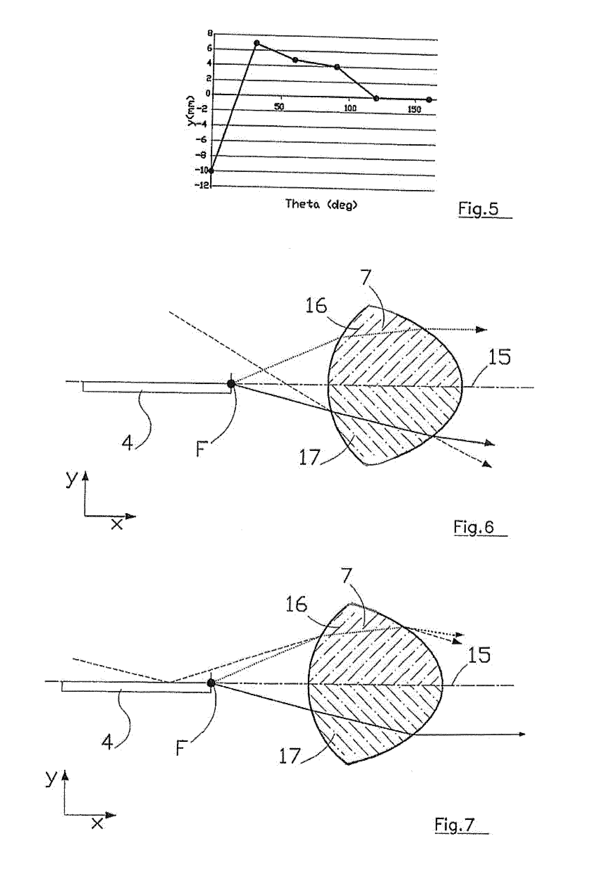

Le réflecteur 6 a ici un profil, dans le plan (x, y), en forme de portion d'ellipse. Des variations autour du profil elliptique sont permises, notamment pour contrôler l'étalement horizontal comme dans le cas de la figure 5.

Cette portion s'étend d'un sommet 20, situé à l'arrière de l'ensemble et sur l'axe x, jusqu'à une extrémité libre vers l'avant par rapport au sommet 20 relativement au chemin de la lumière, c'est-à-dire plus vers l'élément de projection. Le profil de forme elliptique s'étend avantageusement sur un secteur angulaire d'au moins 90°, soit au moins un quadrant d'ellipse (s'entendant ici d'un quart de la surface délimitée par une ellipse et situé entre le grand axe et le petit axe de l'ellipse. Le profil elliptique peut s'étendre au-delà en direction de l'élément de projection pour former un réflecteur à extrémité rentrant vers l'axe optique 15.

Il est entendu que la forme elliptique est ici préférée mais qu'elle n'est pas limitative.

Des variations autour de la forme elliptique stricte sont aussi possibles sans sortir du cadre de l'invention. Pour autant, le profil en position d'ellipse est avantageux tel que le montre la figure 4. En effet, en plaçant le centre de la source 3 à la verticale d'un premier foyer $F_1$ de l'ellipse, les rayons lumineux sont réfléchis par le réflecteur 6 aux alentours du deuxième foyer $F_2$ du profil elliptique. Le placement de la bordure 5 à ce foyer $F_2$ assure qu'une partie des rayons d'origine (sensiblement la moitié) impactent la paroi de cache 4 et sont réfléchis par cette paroi.

Dans le cas illustré en figure 4, la ligne de foyers objets de la lentille 7 est aussi alignée avec le foyer $F_2$ si bien que la bordure 5 est imagée à l'infini par la lentille 7.

Le profil elliptique du réflecteur 6 représenté dans la coupe selon (x, y) de la figure 4 constitue en outre une génératrice pour la construction de la surface entière du réflecteur 6. On décrit ci-après un exemple de détermination de cette surface.

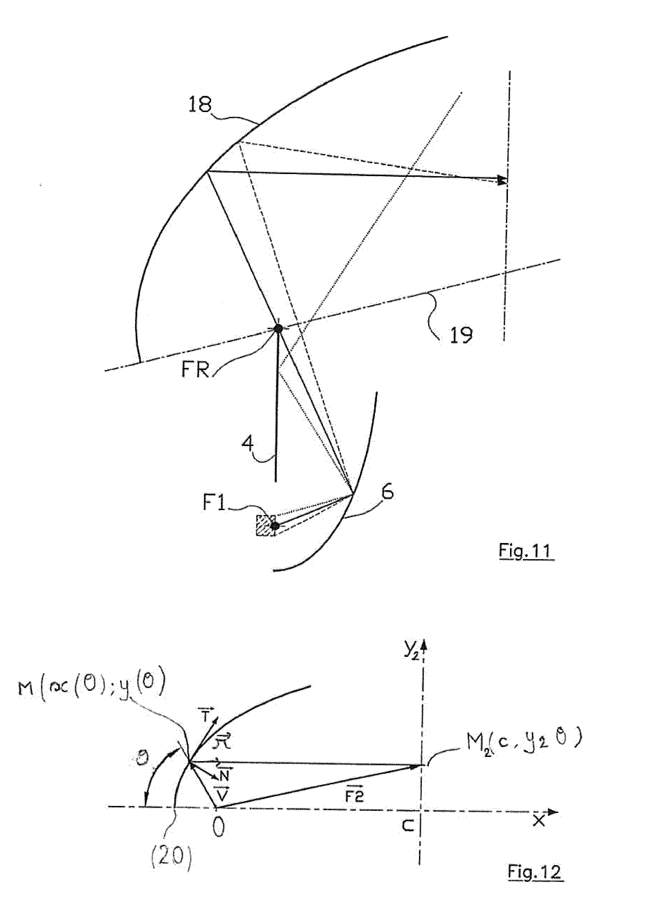

**1** - Une première étape de cette détermination de surface consiste à construire une génératrice du réflecteur (6) dont le profil apparaît notamment en figure 12, dans le plan (x, y) c'est-à-dire z = 0.

A cet effet, pour un point M $(x(\theta)$ ; $y(\theta))$ donné, on calcule un vecteur $\vec{T}$ tangent à la surface du réflecteur et, un

vecteur $\vec{N}$ normal en fonction de l'angle $\theta$ illustré en figure 2 entre l'axe x et la direction OM. $\vec{N}$ et $\vec{T}$ sont aussi déterminés pour que le point d'impact des rayons réfléchis sur une droite $y_2$ située à une distance c de $\theta$ et parallèle à l'axe y ait une coordonnée suivant y égale à une valeur désirée notée $y_2(\theta)$. La figure 5 montre comment on peut ajuster l'étalement du faisceau réfléchi par le réflecteur 6 en jouant sur une fonction $y_2 = f(\theta)$. Dans le cas de la figure 5, la surface du réflecteur 6 est conçue pour beaucoup étaler les grandes images (celles du fond de la surface), un peu moins les moyennes images et très peu les petites images (celles provenant des bords du réflecteur) afin de préserver un maximum d'intensité lumineuse élevé.

On s'arrange préférentiellement pour ne pas créer un manque de lumière dans le faisceau ou des discontinuités dans la surface.

En revenant à la figure 12, on a repéré les éléments suivants :

- O : origine du repère x, y, z au niveau de laquelle le point source utilisé pour ce calcul est placé ;
- M(x($\theta$), y($\theta$), z = 0) ; angle OX,OM = $\theta$ ; un point M de la génératrice tel que :
- $\vec{V} = \overrightarrow{OM}$ ;
- $\vec{F_2} = \overrightarrow{OM_2}$ ;
- $M_2(c, y_2(\theta),0)$ le point au niveau duquel le rayon réfléchi par le réflecteur 6 en M coupe une droite x = c dans le plan z = 0.

On note par ailleurs :

- f : la focale de l'ellipse
- le point « 20 » a une abscisse fixée à x = -f ;
- c est la distance entre les foyers $F_1$ et $F_2$ de l'ellipse portant la génératrice.
- Le foyer $F_1$ est avantageusement situé au point O (0, 0, 0).

Avec ces postulats, on peut écrire :

$$\bullet \quad \vec{V} = \begin{pmatrix} x(\theta) \\ y(\theta) \end{pmatrix} = x(\theta) \begin{pmatrix} 1 \\ -tg\theta \end{pmatrix} \text{ car } y(\theta) = -tg\theta \cdot x(\theta)$$

$$\bullet \quad \vec{T} = \text{grad } \vec{V}$$

$$(1) \quad \bullet \quad \vec{T} = \frac{dx}{d\theta} \begin{pmatrix} 1 \\ -tg\theta \end{pmatrix} + x(\theta) \begin{pmatrix} 0 \\ -\dfrac{1}{\cos^2\theta} \end{pmatrix}$$

$$\bullet \quad \vec{F_2} = \begin{pmatrix} c \\ y_2(\theta) \end{pmatrix}$$

Selon la loi de Descartes :

$$(2) \quad \bullet \quad \vec{N} = \frac{\vec{F_2} - \vec{V}}{\|\vec{F_2} - \vec{V}\|} - \frac{\vec{V}}{\|\vec{V}\|} = \vec{N}(x,\theta)$$

est une normale en M si le rayon réfléchi est bien comme indiqué

On peut rapprocher les formules (1) et (2) car $\vec{N}.\vec{T} = 0$ par définition

$$(3) \quad \bullet \quad \text{x'} \vec{N} \cdot \begin{pmatrix} 1 \\ -tg\,\theta \end{pmatrix} = \text{x} \ \vec{N} \cdot \begin{pmatrix} 0 \\ 1 \\ \dfrac{1}{\cos^2\theta} \end{pmatrix}$$

Où $\quad \text{x'} = \dfrac{\text{dx}}{\text{d}\theta} \quad$ Soit encore

$$(4) \quad \bullet \quad \text{x'} = \dfrac{x N_y / \cos^2\theta}{N_x - tg\theta \cdot N_y}$$

Où on a posé $\quad \vec{N} = \begin{pmatrix} N_x \\ N_y \end{pmatrix}$ dans le repère (O,x,y)

On obtient ainsi l'expression canonique d'une équation différentielle (x' fonction de x et de la variable $\theta$) donnant la génératrice horizontale à partir de la condition initiale x(0) = -f.

**2 -** A partir de la génératrice, on déduit la forme du réflecteur 6 en trois dimensions (détermination de ses points tels que z $\neq$ 0).

D'une manière générale, on opère une projection de la source 3 (de dimension L suivant x et h suivant z) dans un plan vertical $\Pi_n$ passant par le point M (x, y) et contenant la normale $\vec{N}$.

Dans cette projection, on définit quatre segments dans ce plan vertical, chaque segment correspondant à un bord (entre deux coins respectivement 10a, 10b, 10c et 10d visibles sur la figure 3) de la source 3 projetée.

On pose que ces segments sont des morceaux de paraboles et on opère leur détermination.

Plus en détail, on note les paramètres suivants :

- $\varepsilon$ = 1 partie haute du réflecteur (z > 0)
  $\varepsilon$ = -1 partie basse du réflecteur (z < 0)
- Source rectangulaire de longueur L suivant x et de hauteur h suivant z.

  Le centre de la source est placé à $\left(0, 0, -\dfrac{\text{h}}{2}\right)$ dans le repère (O,x,y,z).

- $f_p$ : paramètre de chaque segment de parabole

  Tel que $f_p = (\varepsilon \dfrac{\text{L}}{2} - \text{x})\text{n}_x - y\text{n}_y$

  Et $\quad \vec{n} = \dfrac{\vec{N}}{\|\vec{N}\|} = \begin{pmatrix} n_x \\ n_y \end{pmatrix}$ (vecteur unitaire normal au réflecteur au point M dans le repère (O,x,y)).

  Et $\vec{r}$ = vecteur directeur du rayon réfléchi au point M (normé).

L'intersection d'un cylindre dont la section droite est sensiblement de la forme de la figure 3 (union des 4 portions de paraboles, contenue dans le plan $\Pi_{\vec{n}}$) avec le plan vertical $\Pi_{\vec{r}}$ (plan contenant le vecteur $\vec{r}$ et le point M) correspond à l'intersection de la surface du réflecteur recherché avec le plan $\Pi_{\vec{r}}$. Cette construction est répétée pour toutes les valeurs de $\theta$ de sorte à obtenir une famille de courbes qui définissent la surface. Dans la mesure où les sections droites peuvent être exprimées en fonction de z, on obtient une équation paramétrique E$_1$ en $\theta$ et z de la surface de réflexion.

Dans le plan $\Pi_{\vec{n}}$ , , on peut noter l'équation des segments de parabole correspondant chacun à un bord de la source :

$$(4) \quad \bullet \quad \chi = \frac{(Z+\zeta)^2}{4f_P + 2\varepsilon\zeta} - \frac{\varepsilon\zeta}{2}$$

Avec $\zeta = 0$ si $|Z| < 2f_p$
et $\zeta = h$ si $|Z| > 2f_p$

On pose:

$$\vec{r} = \frac{\overrightarrow{F_2} - \vec{V}}{\left\|\overrightarrow{F_2} - \vec{V}\right\|} = \begin{pmatrix} r_x \\ r_y \end{pmatrix}$$

et $\lambda = \dfrac{\chi}{\vec{r}.\vec{n}}$ qui est la distance entre le point M (x, y) et la projection sur le plan z = 0 du point M'($\theta$, Z) du réflecteur,

de cote Z et compris dans le plan $\Pi_{\vec{r}}$ . .

$$(5) \quad \bullet \quad \text{l'équation E1 précitée a la forme suivante :}$$

$$M' \begin{pmatrix} x + \lambda r_x \\ y + \lambda r_y \\ Z \end{pmatrix}, \text{ fonction de } \theta \text{ et Z.}$$

En résumé, on peut construire un réflecteur 6 assurant l'alignement à l'infini, sur une ligne horizontale perpendiculaire à l'axe optique, des images de la source lumineuse 3, dans l'exemple supposée rectangulaire, plane et disposée selon les figures 3 et 4 notamment. Un tel réflecteur 6 est décrit par une famille de courbes planes continues et dérivables constituées par l'intersection par des plans $\Pi_{\vec{r}}$ verticaux de cylindres d'axes horizontaux et de génératrices constituées de quatre arcs elliptiques focalisés sur des projections dans des plans de construction $\Pi_{\vec{n}}$ des quatre coins 10a, 10b, 10c, 10d) de la source 3. Pour un point donné de la génératrice du réflecteur 6, $\Pi_{\vec{r}}$ . contient le rayon réfléchi de la construction en deux dimensions, $\Pi_{\vec{n}}$ est vertical et contient la normale à la génératrice au point considéré ; l'axe du cylindre est perpendiculaire à $\Pi_{\vec{n}}$ . . Le réflecteur 6 est alors décrit par une équation paramétrique en $\theta$ et z où interviennent les paramètres L et h (respectivement longueur et hauteur de la source 3).

L'alignement à l'infini produit par le réflecteur sur une ligne horizontale est tel qu'au moins un coin de l'image de la source 3 touche la ligne mais que la ligne ne traverse aucun bord de l'image.

**3 -** Exemple pour une ellipse de focale f, de distance entre foyer c et avec un premier foyer en (0,0) employée comme profil de génératrice.

En reprenant les notations précédentes:

$$x = c/2 - (c/2 + f)\cos\Theta$$

$$y = \sqrt{(f+c)f}\,\sin\Theta$$

où $\Theta$ est le paramètre de l'équation paramétrique de l'ellipse donnée ci-dessus (paramètre différent de l'angle $\theta$ du cas général précédent)

On a alors:

$\vec{T}$, vecteur tangent en
$$\mathbf{M} = \begin{cases} (c/2+f)\sin\Theta \\ \sqrt{f(f+c)}\cos\Theta \end{cases}$$

$\vec{N}$, normale intérieure en
$$\mathbf{M} = \begin{cases} \sqrt{f(f+c)}\cos\Theta \\ -(c/2+f)\sin\Theta \end{cases}$$

$$\vec{n} = \frac{\vec{N}}{\|\vec{N}\|} = \frac{\vec{N}}{\sqrt{f^2 + fc + \dfrac{c^2}{4}\sin^2\Theta}}$$

R , vecteur réfléchi pour la construction de la génératrice
$$= \begin{cases} c/2 + (c/2 + f)\cos\Theta \\ -\sqrt{(f+c)f}\,\sin\Theta \end{cases} \qquad \left(\vec{r} = \dfrac{\vec{R}}{\|\vec{R}\|} \text{ n'est pas utilisé ici}\right)$$

$$f_p = \frac{\left((\varepsilon\dfrac{L}{2} - c/2) + (c/2+f)\cos\Theta\right)\sqrt{f(f+c)}\cos\Theta + (c/2+f)\sqrt{f(f+c)}\sin^2\Theta}{\sqrt{f^2 + fc + \dfrac{c^2}{4}\sin^2\Theta}}$$

où
$\varepsilon$ = 1 pour les foyers haut et $\varepsilon$ = -1 pour les foyers bas

$$\vec{R}.\vec{n} = \frac{1}{\sqrt{f^2 + f_c + \dfrac{c^2}{4}\sin^2\Theta}}\left\{c/2\sqrt{f(f+c)}\cos\Theta + (c/2+f)\sqrt{f(f+c)}\right\}$$

$$\lambda = \frac{\dfrac{(Z+\zeta)^2}{4f_p + 2\varepsilon\zeta} - \dfrac{\varepsilon\zeta}{2}}{\vec{R}.\vec{n}}$$

Où $\zeta = 0$ pour les foyers arrières et $\zeta = h$ pour les foyers avant, avec un changement en $|z|\ 2f_p$ et finalement,

$$M \begin{cases} \dfrac{c}{2} - (c/2 + f)\cos\Theta + \lambda\dfrac{c}{2} + \lambda(\dfrac{c}{2} + f)\cos\Theta\theta = (\lambda + 1)\dfrac{c}{2} + (\lambda - 1)(\dfrac{c}{2} + f)\cos\Theta \\[2mm] (1 - \lambda)\sqrt{f(f+c)}\sin\Theta \\[2mm] z \end{cases}$$

Ce point M donne la définition du réflecteur 6 en fonction de $\Theta$ et de z.

Il est possible d'obtenir la même surface en fonction de $\theta$ et z en appliquant les formules du cas général avec $y_2(\theta) = 0$.

Les figures 6 et 7 montrent avec des détails supplémentaires dans un mode de réalisation où la lentille est sensiblement une lentille cylindrique d'axe longitudinal orienté suivant z et dont la coupe dans le plan x, y est celle d'une lentille stigmatique entre le foyer $F_2$ et le point à l'infini sur l'axe optique 15. Au-delà de cette forme globale, la lentille 7 peut être modifiée légèrement par rapport à une lentille purement stigmatique afin de minimiser certaines aberrations.

Ainsi, pour corriger les aberrations géométriques dans le champ objet (y, z) (dans l'exemple préféré vertical), la lentille 7 présente une légère courbure dans le plan vertical.

Pour corriger les aberrations chromatiques, le long de la première coupure 1, on peut employer une lentille 7 avec deux zones 16, 17 représentant avantageusement chacune une moitié de lentille de part et d'autre d'un plan passant par l'axe optique 15 et orienté suivant la première coupure 1. La partie gauche (zone 17) reçoit majoritairement les rayons coupant l'axe optique 15 après le foyer de la lentille $F_2$ de la lentille 7et donc issus d'une réflexion sur la paroi du cache 4 faisant office de plieuse.

La figure 6 montre plus particulièrement la déviation de rayons « rouges » par la lentille 7 et la figure 7 montre la déviation de rayons « bleus ». Plus précisément en figure 6, la zone 17 est conçue pour une longueur d'onde dans le bleu : elle image le deuxième foyer $F_2$ du réflecteur 6. La figure7 illustre que la partie droite (zone 16) est conçue pour une longueur d'onde dans le rouge et elle image également le foyer $F_2$ avec l'infini, et vérifie les mêmes conditions de tirage et d'épaisseur au centre de la lentille 7 que l'autre zone 17. Ainsi, la surface des deux zones 16, 17 se joignent parfaitement pour obtenir une lentille 7 continue, les deux zones 16, 17 ayant par ailleurs, une tangente commune à leur jonction. Un rayon lumineux passant au centre de la lentille 7 et parallèle à l'axe n'est pas dévié quelque soit sa longueur d'onde. Il est préféré que la lentille 7 soit telle que le foyer « rouge » de la zone 16 et le foyer « bleu » de la zone 17 soient confondus au foyer $F_2$ du réflecteur 6, c'est-à-dire préférentiellement au foyer théorique $F_2$ de la lentille 7.

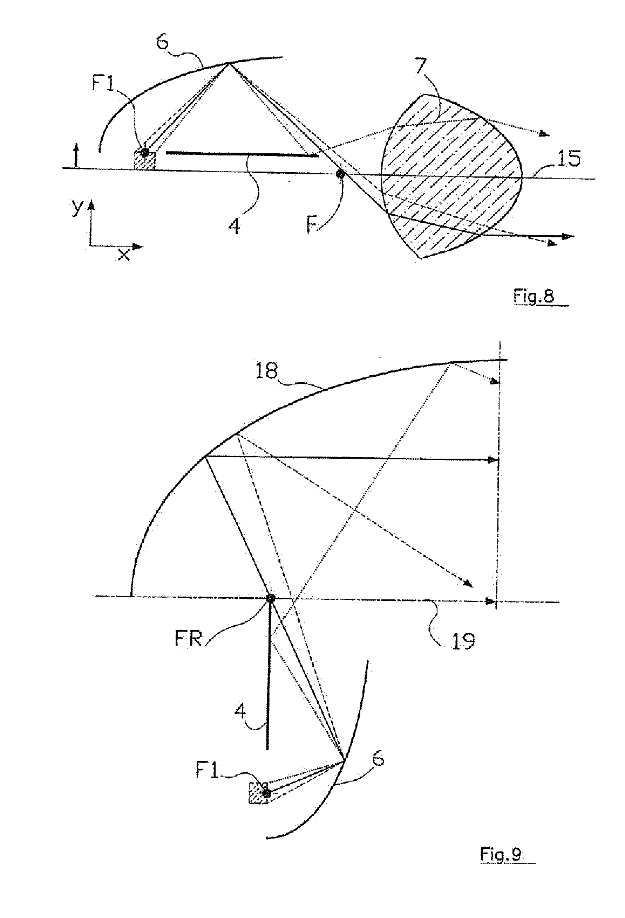

La figure 8 donne une illustration d'une variante du mode de réalisation employant une lentille 7. Dans ce cas, une translation suivant l'axe y est intervenue entre la lentille 7 d'une part et l'ensemble de génération de lumière (comprenant la source lumineuse 3, le réflecteur 6 et la paroi du cache 4) de sorte à décaler ce dernier ensemble de l'axe optique 15 de la lentille 7 et varier, par mouvement relatif interne au dispositif, la direction du faisceau de sortie. D'autres mobilités sont possibles. Des exemples en seront donnés plus loin, en référence à d'autres figures.

L'élément de projection peut être constitué de manière alternative par un réflecteur secondaire 18, ce qui permet notamment de s'affranchir des aberrations chromatiques (absentes dans un miroir métallisé). Un tel mode de réalisation ressort de la figure 9. Les rayons réfléchis par le réflecteur 6 sont réfléchis une nouvelle fois par le réflecteur secondaire 18. Cette configuration permet notamment de décaler angulairement l'axe du faisceau sortant (il est orienté suivant l'axe 19 du réflecteur secondaire 18. Cette configuration permet notamment de décaler angulairement l'axe du faisceau sortant (il est orienté suivant l'axe 19 du réflecteur secondaire 18) relativement à l'axe du réflecteur 6. La surface du réflecteur secondaire 18 est avantageusement celle d'une portion d'un cylindre orienté suivant l'axe z et suivant un profil en partie de parabole avec un foyer $F_r$.

Préférentiellement, le foyer $F_r$ est localisé au niveau de la bordure de la paroi du cache 4 comme cela ressort de la figure 9. Néanmoins, pour faire varier le faisceau de sortie, une mobilité relative peut être mise en oeuvre. Comme dans le mode de réalisation à lentille 7, on peut soit déplacer l'élément de projection formé par le réflecteur secondaire 18, soit déplacer l'ensemble source lumineuse 3, réflecteur 6 et paroi du cache 4. Par ailleurs, le type de mobilité relative n'est pas limité : rotation ou translation peuvent convenir ou une combinaison de mouvements ou encore un déplacement suivant une courbe adaptative.

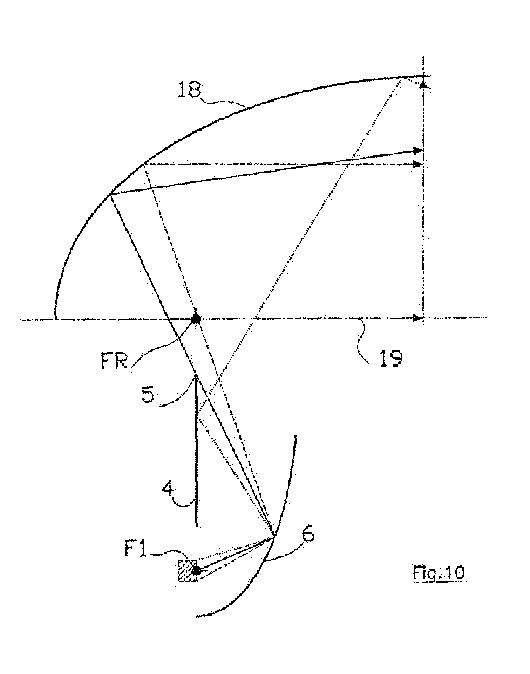

Ainsi, la figure 10 illustre une translation éloignant le foyer $F_r$ de la bordure 5. La figure 11 montre une rotation suivant z autour du foyer $F_r$.

On pourrait aussi choisir d'effectuer le déplacement selon une courbe qui suit les meilleurs foyers de l'élément de projection pour limiter les effets des aberrations. Si le cas de la rotation permet de conserver une netteté plutôt constante sur la coupure vertical (coupure 1 en général) quelque soit l'angle, on perd plus de flux pour un angle de coupure donné que pour un déplacement suivant une courbe.

Quand la focale est courte, à angle donné, on perd moins de flux par une translation que par une rotation. Si son principal inconvénient est le chromatisme (et les aberrations dans le cas d'un réflecteur secondaire 18) qui apparaît dès que l'on défocalise par rapport au foyer F de la lentille, le déplacement suivant une courbe a pour avantage de fournir une coupure 1 nette au centre et plus floue à mesure que l'angle du faisceau augmente. Cela correspond à des cas où l'on détecte des véhicules hors d'axe donc plus proches. Les obstacles situés sur le côté de la route et éclairés par le faisceau à coupure verticale étant partiellement proche eux aussi, on a intérêt à y projeter une coupure moins nette afin d'améliorer le confort de conduite.

Les cas des figures 8, 10 et 11 montrent des exemples de mobilité interne entre l'élément de projection et l'ensemble de génération de lumière. Un mécanisme de mobilité globale du dispositif peut être aussi mis en oeuvre pour former un dispositif tournant, par exemple par montage sur une platine et motorisation. Cela est applicable aux techniques d'éclairage directionnel type DBL (pour Driving Bending Light).

L'invention n'est pas limitée aux modes de réalisation précédemment décrits mais s'étend à tous modes de réalisation conformes à son esprit.

En particulier, le réflecteur 6 peut être agencé pour réaliser la première coupure 1.

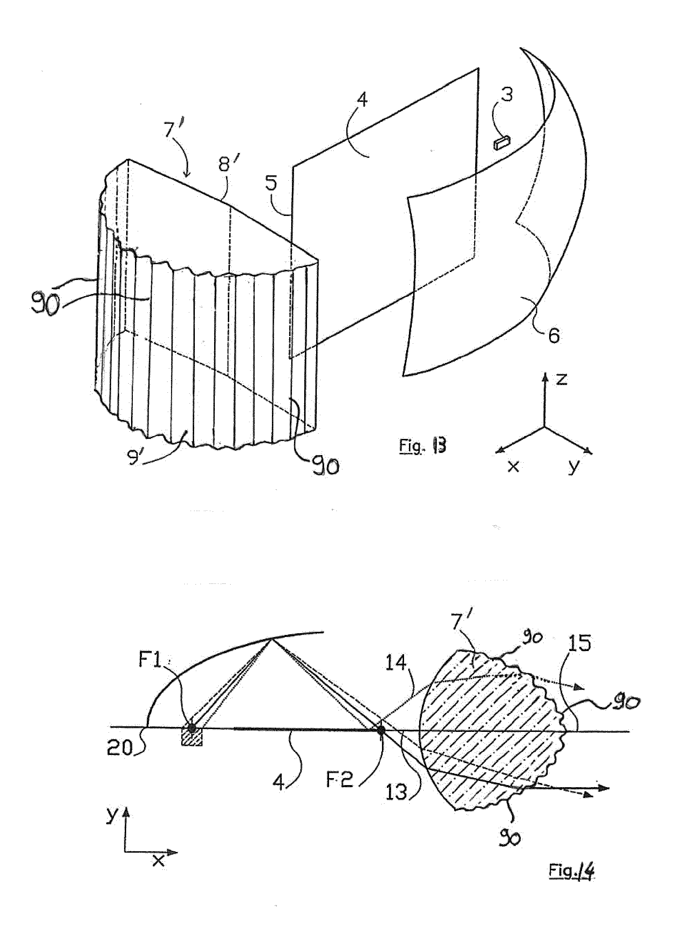

Les figures 13 et 14 présentent une variante de réalisation dans laquelle la lentille 7' comprend une série de motifs sur une surface de sortie 9' de la lentille, lesdits motifs s'étendant selon une direction privilégiée parallèle au bord de coupure 5 du cache 4. Dans cet exemple illustré, les motifs sont des stries 90 s'étendant selon la direction privilégiée et sont configurées et agencées de manière à ce que la face qui les porte est ondulée. Les stries 90 sont obtenues par une modulation d'épaisseur à la surface de sortie 9' de la lentille 7'. En revanche, dans cet exemple, la face d'entrée 8' de la lentille est dépourvue de stries.

Sur les figures 13 et 14, les ondulations ou stries 90 de la lentille 7' ont été exagérées par rapports aux autres éléments de manière à les faire apparaître.

On observe sur ces figures que les stries 90 s'étendent sur toute la surface de sortie 9' de la lentille. La lentille 7' présente une surface géométrique de base correspondant notamment à une face de sortie d'une lentille rigoureusement stigmatique, comme la lentille 7 illustrée en figures 2 et 4. L'amplitude des ondulations est décroissante au fur et à mesure que l'ondulation considérée est éloignée du centre de la lentille.

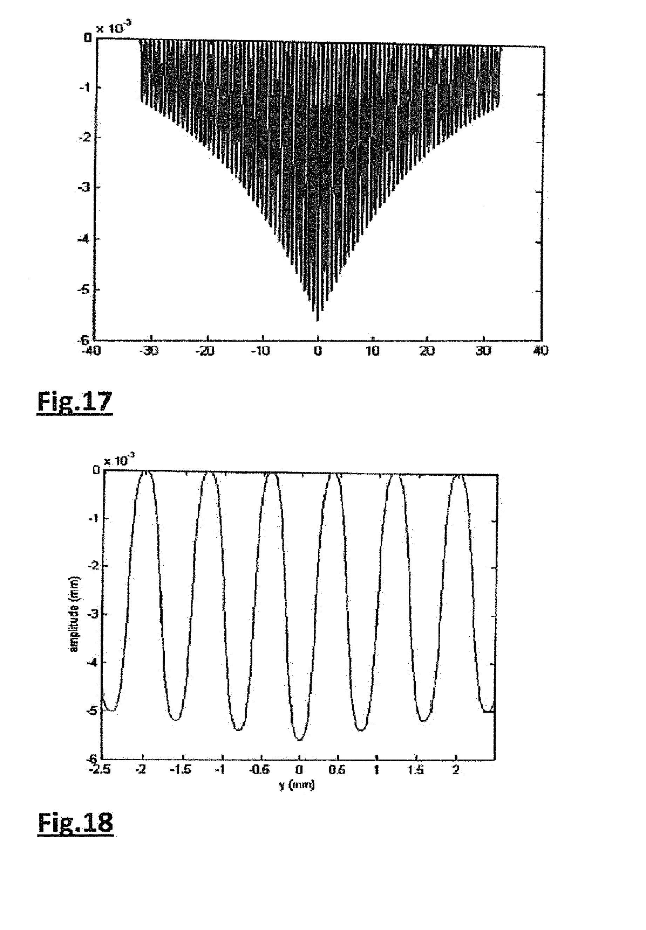

Le profil peut être tel que l'amplitude « a » de la strie centrale est de l'ordre de 1 à 10 micromètres tandis que le pas « p » entre chaque stries est de l'ordre de 1 mm. Sur les exemples illustrés en figures 17 et 18, l'amplitude « a » évolue depuis le centre de la lentille jusqu'au bord de la lentille d'environ 5,6 micromètres à environ 1,2 micromètre ; le pas « p » est constant et est d'environ 0,83 millimètre.

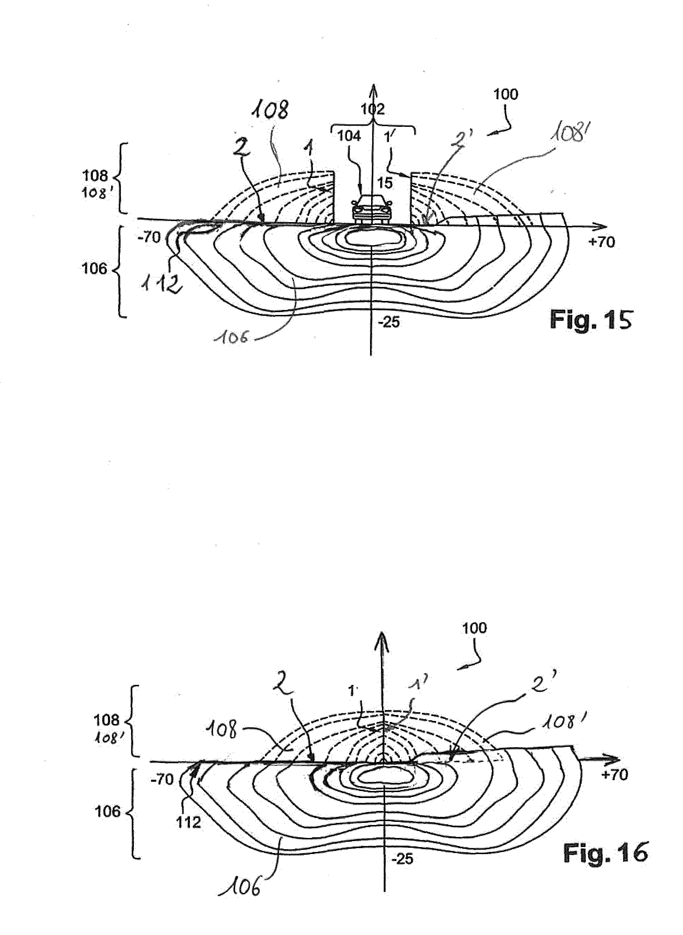

La figure 15 illustre un faisceau route sélectif 100 obtenu au moyen d'un système d'éclairage selon l'invention, ce système d'éclairage comprenant un premier dispositif et un deuxième dispositif de l'invention, le premier dispositif étant agencé pour que son faisceau lumineux de sortie 108 soit à gauche d'une coupure latérale correspondant à sa première coupure 1, le deuxième dispositif étant agencé pour que son faisceau lumineux de sortie 108' soit à droite d'une coupure latérale correspondant à sa première coupure 1'. Ces premières coupures 1 et 1' sont dans cet exemple des coupures verticales. Ces faisceaux sont délimités en bas par une deuxième coupure 2 et 2', qui est donc une coupure inférieure. Lorsqu'il est monté sur un premier véhicule, ce système permet au conducteur de ce premier véhicule d'avoir une visibilité latérale sans éblouir le conducteur d'un second véhicule 104, suivi ou, comme illustré, arrivant en sens inverse. Le système est commandé pour générer dans le faisceau d'éclairage 100 du premier véhicule une zone d'ombre 102, correspondant à la position du second véhicule 104. Ce faisceau d'éclairage, qu'on appelle ci-après faisceau route sélectif, permet à un dispositif optique d'éclairer de part et d'autre de seconds véhicules détectés.

Dans cet exemple, le faisceau d'éclairage dans lequel est généré la zone d'ombre 102 est obtenu au moyen d'un faisceau code 106 (courbes en trait continu) et des deux faisceaux 108 et 108' (courbes en pointillés) générés par les premier et deuxième dispositifs selon l'invention. A noter qu'il est également possible de prendre à la place du faisceau code 106, d'autres faisceaux à coupure supérieure, notamment un faisceau d'éclairage à coupure supérieure horizontale.

La zone d'ombre 102 est délimitée latéralement par les lignes de coupures verticales 1 et 1' des faisceaux lumineux respectivement du premier dispositif et du deuxième dispositif selon l'invention, respectivement le premier faisceau supérieur gauche 108 et le premier faisceau supérieur droit 108'. Le premier faisceau supérieur gauche 108 est semblable à celui de la figure 2 et le premier faisceau supérieur droit 108' est semblable à un symétrique de celui de la figure 2 selon un plan vertical longitudinal XZ.

Ces faisceaux supérieurs vont s'ajouter à un faisceau inférieur 106, de manière à ce que leurs coupures inférieures 2 et 2' se joignent avec la coupure supérieure 112 du faisceau inférieur 106. La netteté de ces lignes de coupures horizontales inférieures 2 et 2' est inférieure à celle qui serait obtenue avec un cache et donc moins nette que les coupures verticales 1 et 1' obtenues par projection de la bordure 5 de cache 4 avec une lentille dépourvue d'ondulation, comme dans les exemples illustrés en figures 1 à 12. Ainsi lorsque les coupures inférieures 2 et 2' des faisceaux supérieurs 108 et 108' sont superposées à la coupure supérieure 112 du faisceau inférieur 106, on n'observe pas de lignes marquées de contraste d'intensité, même si ces coupures 2, 2' et 112 ne sont pas parfaitement superposées.

La figure 16 illustre le cas de figure où aucun véhicule n'est détecté. Dans ce cas, les deux faisceaux supérieurs gauche et droit, 108 et 108', sont rapprochés jusqu'à ce que leurs coupures verticales, respectivement droite 1 et gauche 1', se joignent, éventuellement avec une légère superposition. En utilisant une lentille 7' telle qu'illustrée dans la variante des figures 13 et 14, on évite également des lignes marquées de contraste d'intensité, même si ces coupures latérales 1 et 1' ne sont pas parfaitement superposées.

<u>REFERENCES</u>

1 / 1'. Premières coupures de faisceau supérieur gauche
2 / 2'. Deuxièmes coupures de faisceau supérieur droit 3. Source lumineuse
4. Paroi de cache
5. Bordure
6. Réflecteur
7. Lentille / 7'. Lentille ondulée
8. Face arrière de la lentille 7 / 8' face arrière de la lentille ondulée 7'
9. Face avant de la lentille 7 / 9' face arrière de la lentille ondulée 7'
10 a,b,c,d Coins de la source
11. Rayon émis
12. Rayon réfléchi
13. Rayon direct
14. Rayon indirect
15. Axe optique de la lentille
16. Première portion
17. Deuxième portion
18. Réflecteur secondaire
19. Axe optique du réflecteur secondaire
20. Sommet
90. Stries
100. Faisceau route sélectif
104. Second véhicule arrivant en sens inverse
106. Faisceau de croisement
108. Faisceau supérieur gauche
108'. Faisceau supérieur droit
112. Coupure supérieure du faisceau de croisement

**Revendications**

1. Dispositif d'émission d'un faisceau lumineux de sortie, notamment pour véhicule automobile, ledit faisceau étant délimité par une première coupure (1) suivant un premier plan de coupure et par une deuxième coupure (2) suivant un deuxième plan de coupure différant du première plan de coupure, le dispositif comportant un ensemble de génération de lumière comprenant:

   - une source lumineuse (3),
   - un réflecteur (6) agencé pour générer un faisceau lumineux réfléchi à partir des rayons lumineux issus de la source lumineuse (3),

- une paroi de cache (4) pourvue d'une bordure (5) située sur le chemin du faisceau lumineux réfléchi et configurée pour former la première coupure (1),

**caractérisé en ce que** le réflecteur (6) est agencé pour générer la deuxième coupure (2).

2. Dispositif selon la revendication précédente dans lequel le réflecteur (6) présente une génératrice au profil sensiblement en forme de portion d'une ellipse en section suivant un plan parallèle au deuxième plan de coupure.

3. Dispositif selon la revendication précédente dans lequel le centre de la source lumineuse (3), en projection orthogonale sur le plan de la génératrice, est situé à l'un des foyers ($F_1$, $F_2$) de la génératrice et sur le grand axe de l'ellipse.

4. Dispositif selon la revendication précédente dans lequel la génératrice est située sensiblement au milieu de la hauteur du réflecteur (6) suivant le premier plan de coupure.

5. Dispositif selon l'une des trois revendications précédentes dans lequel la génératrice représente au moins un quadrant de l'ellipse.

6. Dispositif selon l'une des quatre revendications précédentes dans lequel le réflecteur (6) est configuré pour produire en chacun de ses points une image de la source (3) dans un plan perpendiculaire au grand axe de l'ellipse situé à une distance prédéterminée de la source **caractérisée en ce que** cette image touche une droite située à l'intersection entre le plan perpendiculaire et le plan de la génératrice sans que la droite ne traverse ladite image.

7. Dispositif selon l'une des cinq revendications précédentes dans lequel le deuxième plan de coupure est horizontal, la source lumineuse (3) est rectangulaire et dans lequel le plan de la génératrice contient un bord horizontal supérieur de la source lumineuse (3).

8. Dispositif selon l'une des revendications 2 à 7 dans lequel la bordure de la paroi de cache (4) est située sensiblement au niveau d'un deuxième foyer de la génératrice.

9. Dispositif selon l'une des revendications précédentes dans lequel la paroi de cache (4) est réfléchissante.

10. Dispositif selon l'une des revendications précédentes comportant un élément de projection du faisceau lumineux de sortie configuré pour produire un étalement de la lumière suivant le deuxième plan de coupure sans dévier sensiblement les rayons lumineux suivant la direction de la première coupure.

11. Dispositif selon la revendication précédente dans lequel l'élément de projection du faisceau lumineux de sortie comprend une lentille (7; 7').

12. Dispositif selon la revendication précédente dans lequel la lentille (7; 7') comporte une ligne de foyers située au niveau de la bordure (5) de la paroi de cache (4).

13. Dispositif selon la revendication précédente dans lequel la lentille (7; 7') est cylindrique d'axe perpendiculaire au deuxième plan de coupure.

14. Dispositif selon l'une des deux revendications précédentes dans lequel la lentille (7; 7') comporte deux portions (16, 17) de sections différentes suivant le deuxième plan de coupure, une première des deux portions recevant majoritairement de la lumière issue directement du réflecteur (6), la seconde des deux portions recevant majoritairement de la lumière issue d'une réflexion sur la paroi de cache (4), les profils des deux portions (16, 17) se rejoignant au niveau de l'axe optique de la lentille (7; 7') avec une direction de tangente commune.

15. Dispositif selon l'une des revendications 11 à 14, dans lequel la lentille (7') comprend une série de motifs sur une surface de sortie (9') de la lentille, lesdits motifs s'étendant selon une direction privilégiée parallèle à la bordure (5) du cache (4)

16. Dispositif selon la revendication 10 dans lequel l'élément de projection du faisceau lumineux de sortie comprend un réflecteur secondaire (18) dont la surface est une portion de cylindre orientée parallèlement au premier plan de coupure et de profil en forme de portion de parabole.

**17.** Dispositif selon la revendication précédente dans lequel le profil en forme de portion de parabole comporte un foyer situé sensiblement au niveau de la bordure de la paroi de cache (4).

**18.** Dispositif selon l'une des revendications 10 à 17 dans lequel l'élément de projection et l'ensemble de génération de lumière présentent une mobilité relative.

**19.** Dispositif selon l'une des revendications précédentes dans lequel le premier plan de coupure est vertical et le deuxième plan de coupure est horizontal.

**20.** Module de projection de lumière comportant un dispositif selon l'une des revendications précédentes et des moyens de rotation dudit dispositif.

**21.** Système d'éclairage comprenant un premier dispositif selon l'une des revendications 1 à 19 et un deuxième dispositif selon l'une des revendications 1 à 19, le premier dispositif étant agencé pour que son faisceau lumineux de sortie soit à droite d'une coupure latérale correspondant à sa première coupure, le deuxième dispositif étant agencé pour que son faisceau lumineux de sortie soit à gauche d'une coupure latérale correspondant à sa première coupure.

Fig.1

Fig.2

Fig.3

Fig.4

Fig.5

Fig.6

Fig.7

Fig.8

Fig.9

18

19

FR

5

4

F1

6

Fig.10

Fig.11

Fig.12

Fig. 13

Fig. 14

**Fig. 15**

**Fig. 16**

**Fig.17**

**Fig.18**

Europäisches
Patentamt

European
Patent Office

Office européen
des brevets

**RAPPORT DE RECHERCHE EUROPEENNE**

Numéro de la demande

EP 12 19 3271

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 2 261 556 A1 (VALEO VISION [FR]) 15 décembre 2010 (2010-12-15) * revendication 1; figures 1-6 * ----- | 1-21 | INV. F21S8/12 F21V5/04 |
| A | EP 0 933 586 A1 (VALEO VISION [FR]) 4 août 1999 (1999-08-04) * revendications 1-15; figures 1-31 * ----- | 1-21 | |
| A | EP 0 247 936 A1 (CIBIE PROJECTEURS [FR]) 2 décembre 1987 (1987-12-02) * figures 1-10 * ----- | 1-21 | |
| A | EP 2 278 217 A1 (VALEO VISION [FR]) 26 janvier 2011 (2011-01-26) * abrégé; figures 1-12 * ----- | 1-21 | |
| A | GB 2 284 658 A (KOITO MFG CO LTD [JP]) 14 juin 1995 (1995-06-14) * figures 1-21 * ----- | 1-21 | |
| A | GB 2 252 151 A (KOITO MFG CO LTD [JP]) 29 juillet 1992 (1992-07-29) * abrégé * ----- | 1-21 | DOMAINES TECHNIQUES RECHERCHES (IPC) F21V F21S |
| A | EP 2 336 634 A1 (KOITO MFG CO LTD [JP]) 22 juin 2011 (2011-06-22) * abrégé; figures 5a, 5b * * alinéa [0033] * ----- | 1-21 | |
| A | EP 1 980 787 A1 (KOITO MFG CO LTD [JP]) 15 octobre 2008 (2008-10-15) * abrégé; figure 5 * ----- | 15 | |

Le présent rapport a été établi pour toutes les revendications

| Lieu de la recherche | Date d'achèvement de la recherche | Examinateur |
|---|---|---|
| Munich | 30 novembre 2012 | Giraud, Pierre |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.......................................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.** EP 12 19 3271

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-11-2012

| Document brevet cité au rapport de recherche | | Date de publication | Membre(s) de la famille de brevet(s) | | Date de publication |
|---|---|---|---|---|---|
| EP 2261556 | A1 | 15-12-2010 | EP | 2261556 A1 | 15-12-2010 |
| | | | FR | 2946729 A1 | 17-12-2010 |
| | | | JP | 2011009211 A | 13-01-2011 |
| | | | US | 2011002133 A1 | 06-01-2011 |
| EP 0933586 | A1 | 04-08-1999 | DE | 69926090 D1 | 18-08-2005 |
| | | | DE | 69926090 T2 | 20-04-2006 |
| | | | EP | 0933586 A1 | 04-08-1999 |
| | | | ES | 2244152 T3 | 01-12-2005 |
| | | | FR | 2774149 A1 | 30-07-1999 |
| EP 0247936 | A1 | 02-12-1987 | DE | 3763453 D1 | 02-08-1990 |
| | | | EP | 0247936 A1 | 02-12-1987 |
| | | | FR | 2599120 A1 | 27-11-1987 |
| | | | JP | 2066450 C | 24-06-1996 |
| | | | JP | 7093042 B | 09-10-1995 |
| | | | JP | 62285301 A | 11-12-1987 |
| | | | US | 4754374 A | 28-06-1988 |
| EP 2278217 | A1 | 26-01-2011 | EP | 2278217 A1 | 26-01-2011 |
| | | | FR | 2948439 A1 | 28-01-2011 |
| | | | JP | 2011029183 A | 10-02-2011 |
| GB 2284658 | A | 14-06-1995 | DE | 4443953 A1 | 14-06-1995 |
| | | | GB | 2284658 A | 14-06-1995 |
| | | | US | 5620246 A | 15-04-1997 |
| GB 2252151 | A | 29-07-1992 | DE | 4138322 A1 | 06-08-1992 |
| | | | FR | 2671851 A1 | 24-07-1992 |
| | | | GB | 2252151 A | 29-07-1992 |
| | | | JP | 2517485 B2 | 24-07-1996 |
| | | | JP | 4248201 A | 03-09-1992 |
| | | | US | 5192124 A | 09-03-1993 |
| EP 2336634 | A1 | 22-06-2011 | CN | 102109137 A | 29-06-2011 |
| | | | EP | 2336634 A1 | 22-06-2011 |
| | | | JP | 2011129320 A | 30-06-2011 |
| | | | KR | 20110068864 A | 22-06-2011 |
| | | | US | 2011141753 A1 | 16-06-2011 |
| EP 1980787 | A1 | 15-10-2008 | CN | 101285561 A | 15-10-2008 |
| | | | EP | 1980787 A1 | 15-10-2008 |
| | | | JP | 4782064 B2 | 28-09-2011 |
| | | | JP | 2008262755 A | 30-10-2008 |
| | | | KR | 20080092274 A | 15-10-2008 |
| | | | US | 2008253141 A1 | 16-10-2008 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**

EP 12 19 3271

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-11-2012

| Document brevet cité<br>au rapport de recherche | Date de<br>publication | Membre(s) de la<br>famille de brevet(s) | Date de<br>publication |
|---|---|---|---|
| | | | |

EPO FORM P0460

**EP 2 597 360 A1**

RÉFÉRENCES CITÉES DANS LA DESCRIPTION

**Documents brevets cités dans la description**

- FR 2942020 A1